# EUROPEAN PATENT APPLICATION

(11) **EP 2 887 652 A1**
(43) Date of publication of application: **24.06.2015**
(21) Application number: 13829457.4
(22) Date of filing: 15.08.2013
(51) Int. Cl.: H04N 7/15

(54) **METHOD FOR PROCESSING AUDIO INPUT STATE, SENDING-END DEVICE AND RECEIVING-END DEVICE**

(30) Priority: 16.08.2012 CN 201210292191
(71) Applicant: ZTE Corporation, Shenzhen, Guangdong 518057 (CN)
(72) Inventor: LI, Junrong, Shenzhen Guangdong 518057 (CN)
(74) Representative: Mozzi, Matteo
(86) International application number: PCT/CN2013/081577
(87) International publication number: WO 2014/026625

(57) **Abstract**

A method and device for processing an audio input state is provided. The method includes: a sending end acquire audio input state information of the sending end, wherein the audio input state information indicates that the audio input is turned ON or OFF; and the sending end sends the audio input state information to a receiving end. By virtue of the above method, the problem in the related art that there is no such system for processing the voice input state of the sending end at the receiving end, which makes it difficult for a user to distinguish which user is speaking currently, and causes the occurrence of some unfriendly events, and degrades the user experience, is solved. Thus the receiving end can obtain the current voice input states of other user equipments and identify who is the current speaker clearly, which makes a user interface more friendly and improves the user experience.

## Description

### Technical Field

The present invention relates to the field of communications, and in particular to a method and device for processing an audio input state.

### Background

Video conference is a new telecommunication mode rising in recent years, which can realizes the real-time transmission of sounds and images, and meanwhile can transmits signals such as still images, files, and faxes. By this way, the communication distance between people has been shortened, and a previous conference mode has been changed. Thus not only the human and financial resources have been saved, but also work efficiency has been improved. A video conference system collects the image and the sound via devices such as a cameras and a microphone, and converts the image and the sound into a digital signal and compress it via a coder, and then transmits the signal out over a communication network. The opposite side decompresses the received digital signal and converts back to an analogue signal, and display the image and the sound via a display device and a loudspeaker. The whole process above is basically performed in real time.

With regard to the video conference system, the quality of the voice and the image are directly related to the user experience, because the display quality of the image and the friendly degree of an operation interface directly decide the quality of the video conference system. The current video conference system is increasingly focused on a friendly user interface. Therefore, it is necessary to provide a method for interface prompting in a friendly mode based on the current video conference system. In some circumstances, when a video conference is held, generally, pluralities of ends have their own voice input devices because the conference sites located at different places. In a case of a multi-voice input scenario, it is difficult to distinguish which user is the current speaker. Therefore the functional defect of the system causes the occurrence of some unfriendly events, which degrades the user experience.

### Summary

The embodiments of the present invention provide a method for processing an audio input state, a sending end and a receiving end, to at least solve the problem in the related art that there is no such a video conference system for processing the voice input state of a sending end at a receiving end, which makes it difficult for a user to distinguish which users are speaking, causes the occurrence of some unfriendly events, and degrades the user experience.

According to one aspect of the present invention, a method for processing an audio input state is provided, includes: a sending end acquiring audio input state information from the sending end, wherein the audio input state information includes: the audio input is turned ON or OFF; and the sending end sending the audio input state information to a receiving end.

Preferably, a sending end acquiring audio input state information of the sending end includes: the sending end detecting whether an audio input state is changed; and if so, acquiring the audio input state information of the sending end.

Preferably, after the sending end sends the audio input state information to a receiving end, the method further includes: the receiving end analysing the audio input state information to obtain an audio input state of the sending end; and the receiving end displaying the audio input state of the sending end.

Preferably, the receiving end analysing the audio input state information includes: the receiving end analysing the audio input state information according to an activity degree of a logic channel of H.245 protocol, wherein the activity degree includes: active or inactive.

Preferably, the receiving end analysing the audio input state information according to an activity degree of a logic channel of H.245 protocol includes: if the logic channel displayed by the audio input state information is active, determining that the current audio input state is ON; and if the logic channel displayed by the audio input state information is inactive, determining that a current audio input state is OFF.

According to another aspect of the present invention, a method for processing an audio input state is provided, includes: an acquisition module, configured to acquire audio input state information from the sending end, wherein the audio input state information includes: the audio input is turned ON or OFF; and a sending module, configured to send the audio input state information to a receiving end.

Preferably, the acquisition module includes: a detecting unit, configured to detect whether an audio input state of the sending end is changed; and an acquisition unit, configured to acquire, in a case where the audio input state of the sending end is changed, audio input state information of the sending end.

According to still another aspect of the present invention, a receiving end is provided, includes: an analysing module, configured to analyse audio input state information to obtain an audio input state of the sending end, wherein the audio input state information includes: the audio input is turned ON or OFF; and a display module, configured to display the audio input state of a sending end.

Preferably, the analysing module performs analysing according to a following mode: analysing the audio input state information according to an activity degree of a logic channel of H.245 protocol, wherein the activity degree includes: active or inactive.

Preferably, the analysing module includes: a first determination unit, configured to determine, in a case where the logic channel displayed by the audio input state information is active, that a current audio input state is ON; and a second determination unit, configured to determine, in a case where the logic channel displayed by the audio input state information is inactive, that a current audio input state is OFF.

In the embodiments of the present invention, the sending end acquires its own audio input state information, wherein the above-mentioned audio input state information indicates the audio input state of the sending end; and after acquiring the audio input state information, the sending end sends the information to the receiving end. By sending the audio input state information to the receiving end in the embodiments of the present invention, the problem in the related art that there is no such video conference system for processing the voice input state of the sending end at the receiving end, which makes it difficult for a user to distinguish which users are speaking, causes the occurrence of some unfriendly events, and degrades the user experience, is solved. Thus the receiving end may obtains the current voice input states of other user equipments and identify who is the current speaker, which makes a conference interface more friendly and improves the user experience.

### Brief Description of the Drawings

Drawings, provided for further understanding of the present invention and forming a part of the specification, are used to explain the present invention together with embodiments of the present invention rather than to limit the present invention. In the drawings:
Fig. 1 is a flowchart of a method for processing an audio input state according to an embodiment of the present invention;
Fig. 2 is structure block diagram 1 of a sending end according to an embodiment of the present invention;
Fig. 3 is structure block diagram 2 of a sending end according to an embodiment of the present invention;
Fig. 4 is structure block diagram 1 of a receiving end according to an embodiment of the present invention;
Fig. 5 is structure block diagram 2 of a receiving end according to an embodiment of the present invention;
Fig. 6 is a flowchart of an indication method for video conference terminal interface according to embodiment 1 of the present invention;
Fig. 7 is a schematic structural diagram of an audio input system according to embodiment 2 of the present invention; and
Fig. 8 is a flowchart of detecting an audio input state of a far end according to embodiment 2 of the present invention.

### Detailed Description of the Embodiments

The present invention is described below with reference to the drawings and embodiments in detail. It should be noted that the embodiments of the present application and the characteristics of the embodiments can be combined with each other if there is no conflict.

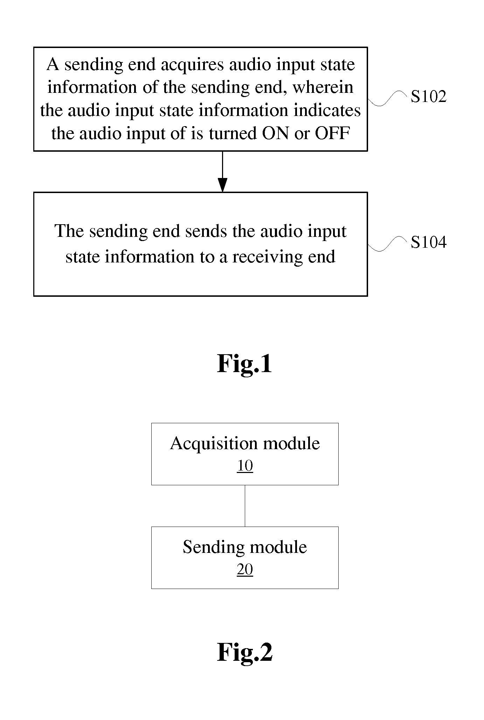

In the related art, in the video conference of a multi-voice input, there is no such system for processing the voice input state, which makes it difficult for a user to distinguish which users are speaking, and causes the occurrence of some unfriendly events. In some scenarios, it is very necessary to know of the current state of the voice input device of each end at the conference, i.e., whether it is an ON or an OFF state, which can friendly and clearly display which end is speaking at present and of which end the voice input device is OFF on a display setup. The urgent problems to be solved are how to realize displaying the state of the voice input device of the opposite end on a current terminal application interface, using a current signalling system as much as possible, and being able to update the state in real time. An embodiment of the present invention provides a method for processing an audio input state; and by applying the embodiment, the ON/OFF state of the voice input device of the opposite end is displayed in real time on an input device of a local end. A flowchart of the method for processing an audio input state provided in the embodiment of the present invention is as shown in Fig. 1, includes step S102 to step S104:
step S102, a sending end acquires audio input state information of the sending end, wherein the audio input state information includes: the audio input is turned ON or OFF; and
step S104, the sending end sends the audio input state information to a receiving end.

In the embodiment of the present invention, the sending end acquires its own audio input state information, wherein the above-mentioned audio input state information indicates the audio input state of the sending end; and after acquiring the audio input state information, the sending end sends the information to the receiving end. By sending the audio input state information to the receiving end in the embodiments of the present invention, the problem in the related art that there is no such system for processing the voice input state of a sending end at a receiving end, which makes it difficult for a user to distinguish which users are speaking, causes the occurrence of some unfriendly events, and degrades the user experience, is solved. It is allowed that a receiving end can obtain the current voice input states of other user equipments and identify who is the current speaker clearly, which makes a conference interface more friendly and improves the user experience.

Before a sending end acquires audio input state information of the sending end, it can also be detected that whether an audio input state is changed; and if the audio input state is changed, the send end acquires the audio input state information of the sending end. If the audio input state is not changed, the sending end does not acquire the audio input state information. In such a way, the audio input state information is acquired when there is a change, which can save system resources. Of course, the sending end can also acquire the audio input state information, regardless of whether the audio input state is changed, and sends all the acquired information to the receiving end to be processed.

During a process that the sending end sends the audio input state to the far end at the conference, a non-standard message or a logic channel active and a logic channel inactive message can be used to inform the opposite end in standard H.245 signalling.

After the sending end sends the audio input state information to the receiving end, the receiving end analyses the audio input state information. The sending end processes and sends the audio input state information according to a standard H.245 protocol, and the receiving end analyses same according to the H.245 protocol. The receiving end analyses the audio input state information according to an activity degree of a logic channel of H.245 protocol, wherein the activity degree may comprise: two states of active and inactive.

If the logic channel displayed by the analysed audio input state information is active, determining that the current audio input state is ON; and if the logic channel displayed by the audio input state information is inactive, determining that the current audio input state is OFF. The operation of reflecting the state of the current audio input according to the activity degree of the logic channel is simple and easy to implement.

After operation of analysing, the receiving end displays the audio input state of the sending end obtained by analysing. Method for displaying may be multiple types, such as initiating a message to indicate the current state of other devices to a user, and displaying can also be performed according to an icon of a little horn.

An embodiment of the present invention further provides a sending end, of which a structure is as shown in Fig. 2, includes: an acquisition module **10,** configured to acquire audio input state information from the sending end, wherein the audio input state information includes: ON or OFF; and a sending module **20,** which is coupled with the acquisition module **10,** configured to send the audio input state information to a receiving end.

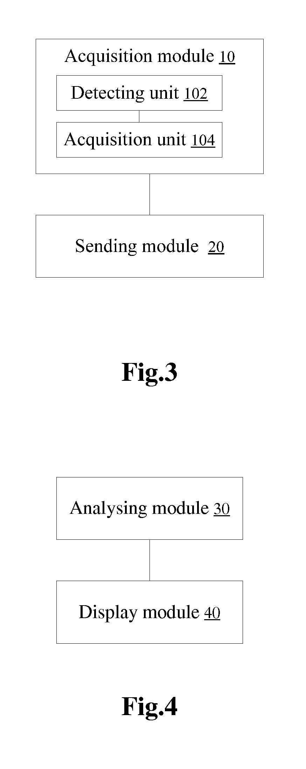

The sending end can also be as shown in Fig. 3, wherein the acquisition module **10** includes: a detecting unit **102,** configured to detect whether an audio input state is changed; and an acquisition unit **104,** which is coupled with the detecting unit **102,** configured to acquire, in a case where the audio input state is changed, audio input state information from the sending end.

With respect to the above-mentioned sending end, an embodiment of the present invention further provides a receiving end, of which a structure can be as shown in Fig. 4, includes: an analysing module **30,** configured to analyse audio input state information, wherein the audio input state information includes: ON state or OFF state; and a display module **40,** which is coupled with the analysing module **30,** configured to display the audio input state of a sending end obtained by analysing. When the above-mentioned analysing module **30** is working, the audio input state information can be analysed according to an activity degree of a logic channel of H.245 protocol, wherein the activity degree includes active and inactive.

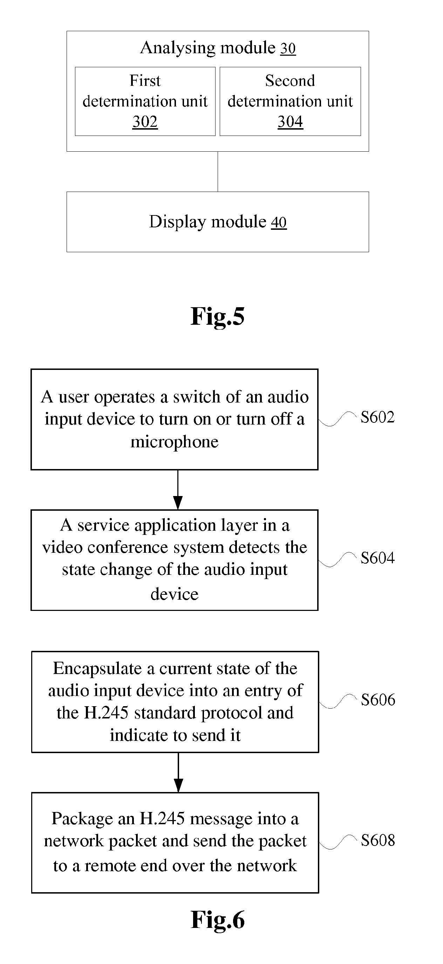

In the preferred embodiment as shown in Fig. 5, the analysing module **30** further includes: a first determination unit **302,** configured to determine, in a case where the logic channel displayed by the audio input state information is active, that a current audio input state is ON; and a second determination unit **304,** configured to determine, in a case where the logic channel displayed by the audio input state information is inactive, that a current audio input state is OFF.

The above-mentioned embodiments are described below with reference to preferred embodiments.

### Embodiment 1

With the evolution of the operation of video conference, a multi-point conference is very widely applied; and in some scenarios, it is very necessary to display an ON/OFF state of a voice input device of the terminals at the conference in real time on an output device. For this purpose, the embodiment of the present invention provides a method for processing an audio input state; and the method can be applied to the above-mentioned scenario. When the method is used, the assistance of the related art can be based on; and relevant devices may include: a video/audio input device, a video conference terminal system, and a video/audio output device, etc. The device in the related art is simply described below.

A video/ audio input device: it is the peripheral in a video conference system, and it is used for collecting the input of the video and audio, such as the video signal is collected via a camera and a DVD; and an audio signal is collected via a microphone.

A video conference terminal system: the video conference system is responsible for realizing the service function of the video conference, the service function includes the coding and decoding of media data, service processing, protocol stack processing, image management, etc. With respect to the method of the present embodiment, it mainly contains the following three associated instances: the service application layer is responsible for realizing the service control of the video conference; a signalling processing layer is responsible for processing the related signalling. In the present embodiment, the ON/OFF state of the audio input of the local end is sent to the opposite end according to H.245 standard protocol signalling or a non-standard protocol; and a TCP/IP communication layer is responsible for realizing encapsulating an H.245 message or a non-standard message into a standard TCP/IP network packet, to be transmitted over a network.

In the present embodiment, the audio input state is sent to the remote end at the conference; and a non-standard message or a logic channel active and a logic channel inactive message can be used to inform the opposite end in standard H.245 signalling. In the following specific embodiment, the standard H.245 signalling will be described as an example.

A video/audio output device: it is the peripheral in the video conference system, and it is used for realizing output of the video and audio. The present released audio input state of the opposite end is displayed in a graphical form via a display device.

Implementation steps of an indication method for video conference terminal interface superpose time of the present referred embodiment are as follows; and the process is as shown in Fig. 6, includes step S602 to step S608.

Step S602, a user operates a switch of an audio input device, to turn on or turn off a microphone.

Step S604, a service application layer in a video conference system detects the state change of the audio input device.

Step S606, the H.245 protocol in the video conference system at a signalling processing layer encapsulates a current audio input device state into a miscellaneous indication in the H.245 standard protocol to be sent. A value in the indication being logical channel active represents that a current user turns on the audio input device; and a value in the indication being logical channel inactive represents that a current user turns off the audio input device.

Step S608, protocol layer instance TCP/IP communication layer in the video conference system packs an H.245 message into a network packet uploaded and input by a network, to be sent to a far end by the network.

When the far end receives the network packet, the TCP/IP communication layer unpacks the network packet in a reverse manner, analyses the H.245 message, and analyses a value of the received miscellaneous indication. If a logic channel active message is received, it is reported to an application layer, and the audio input state of the far end in an output display device is updated to be an ON state; if it is a logic channel inactive message, it is reported to the application layer, and the audio input state of the far end in an output display device is updated to be an OFF state; and if a multi-point conference is held, when it is reported to the application layer, it is distinguished which terminal at the conference sends the signalling according to an IP address of the received signalling at the terminal at the conference, and different icons distinguish and display the audio input state of which terminal at the conference is changed.

Compared with the related art, the present preferred embodiment provides a method for dynamically displaying an audio input state of a far end, which can not only use the standard H.245 message in the video conference system to realize a method for displaying the audio input state of the far end in real time without adding private signalling, but also realize a method for displaying the audio input state of the far end by using non-standard private signalling.

### Embodiment 2

The method for a video conference to display an audio input state of an opposite end in real time in the present invention will be described in combination with the drawings below.

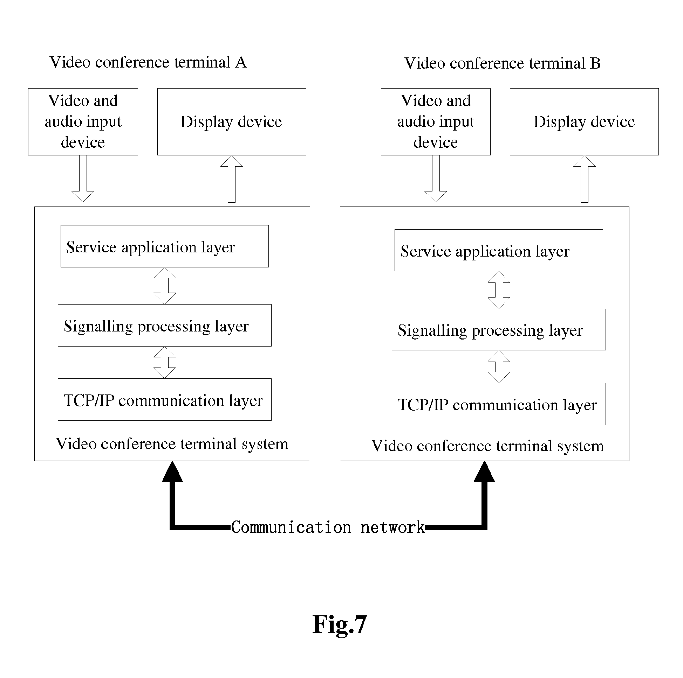

As shown in Fig. 7, when a user turns on the audio input device which is connected to a video conference terminal A, an audio input state icon can be synchronously displayed on a remote video conference terminal B. When the audio input device of the video conference terminal A is turned off, an icon indicating the audio input of the terminal A is silent (the terminal A can be distinguished based on the icon) is displayed on a display device of the video conference terminal B; and when the audio input device of the video conference terminal A is turned on, the icon indicating the audio input of the terminal A is displayed on the display device of the video conference terminal B.

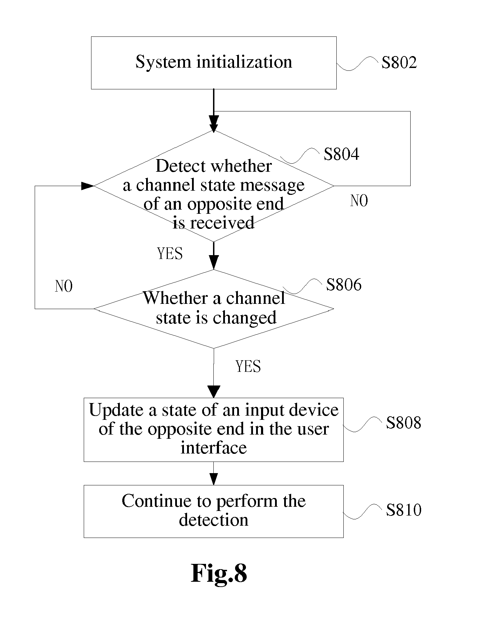

As shown in Fig. 8, it is a flowchart of a video conference terminal system detecting an audio input state of a far end, and the flowchart includes step S802 to step S810.

Step S802, a video conference is started, a video conference terminal system performs initialization.

Step S804, a service application layer in the video conference terminal system detects whether a channel state message, i.e., a logic channel active (i.e., activation) or inactive message in H.245, of an opposite end is received. If so, execute step S806; otherwise, continue to perform detection.

Step S806, judge whether the state information is changed. If so, execute step S808; otherwise, execute step S804.

Step S808, update an image indication of an audio input device of the opposite end in an output display device. If the logic channel changes from active to inactive, or changes conversely, update the image indication of the audio input device of the opposite end in the output display device.

Step S810, continue to perform the detection.

From description above, it can be seen that the embodiment of the present invention realizes the following technical effects:

A sending-end in the embodiment of the present invention acquires its own audio input state information, wherein the above-mentioned audio input state information indicates the audio input state of the sending end; and after acquiring the audio input state information, the sending end sends the information to the receiving end. By sending the audio input state information to the receiving end in the embodiments of the present invention, the problem in the related art that there is no system for processing the voice input state of a sending-end at a receiving-end, which makes it difficult for a user to distinguish which users are speaking, causes the occurrence of some unfriendly events, and degrades the user experience, is solved. Thus the receiving end can obtain the current voice input states of other user equipments and identify the current speaker, which makes the conference interface more friendly and improves the user experience.

Apparently, those skilled in the art shall understand that the above modules and steps of the present invention can be realized by using general purpose calculating device, can be integrated in one calculating device or distributed on a network which consists of a plurality of calculating devices, and alternatively they can be realized by using the executable program code of the calculating device, so that consequently they can be stored in the storing device and executed by the calculating device, in some cases, can perform the shown or described step in sequence other than herein, or they are made into integrated circuit module respectively, or a plurality of modules or steps thereof are made into one integrated circuit module. In this way, the present invention is not restricted to any particular hardware and software combination.

The above description is only preferred embodiments of the present invention and is not intended to limit the present invention, and the present invention can have a variety of changes and modifications for those skilled in the art. Any modification, equivalent replacement, or improvement made within the spirit and principle of the present invention shall all fall within the protection scope of the present invention.

## Claims

1. A method for processing an audio input state, **characterized by** comprising:
a sending end acquiring audio input state information of the sending end, wherein the audio input state information indicates that the audio input is turned on or off; and
the sending end sending the audio input state information to a receiving end.

2. The method according to claim 1, **characterized in that** the sending end acquiring the audio input state information of the sending end comprises:
the sending end detecting whether an audio input state is changed; and
if the audio input state is changed, the sending end acquiring the audio input state information of the sending end.

3. The method according to claim 1 or 2, **characterized in that** after the sending end sends the audio input state information to the receiving end, the method further comprises:
the receiving end analysing the audio input state information to obtain an audio input state of the sending end; and
the receiving end displaying the audio input state of the sending end.

4. The method according to claim 3, **characterized in that** the receiving end analysing the audio input state information comprises:
the receiving end analysing the audio input state information according to an activity degree of a logic channel of H.245 protocol, wherein the activity degree comprises: active or inactive.

5. The method according to claim 4, **characterized in that** the receiving end analysing the audio input state information according to an activity degree of a logic channel of H.245 protocol comprises:
if the logic channel displayed by the audio input state information is active, determining that a current audio input state is ON; and
if the logic channel displayed by the audio input state information is inactive, determining that a current audio input state is OFF.

6. A sending end, **characterized by** comprising:
an acquisition module, configured to acquire audio input state information of the sending end, wherein the audio input state information indicates that the audio input is turned ON or OFF ; and
a sending module, configured to send the audio input state information to a receiving end.

7. The sending end according to claim 6, **characterized in that** the acquisition module comprises:
a detecting unit, configured to detect whether an audio input state is changed; and
an acquisition unit, configured to acquire, in a case where the audio input state is changed, the audio input state information from the sending end.

8. A receiving end, **characterized by** comprising:
an analysing module, configured to analyse audio input state information of a sending end to obtain an audio input state of the sending end, wherein the audio input state information indicates: the audio input of the sending end is turned ON or OFF; and
a display module, configured to display the audio input state of the sending end.

9. The receiving end according to claim 8, **characterized in that** the analysing module performs analysing according to a following mode:
analysing the audio input state information according to an activity degree of a logic channel of H.245 protocol, wherein the activity degree comprises: active or inactive.

10. The receiving end according to claim 9, **characterized in that** the analysing module comprises:
a first determination unit, configured to determine, in a case where the logic channel displayed by the audio input state information is active, that a current audio input state is ON; and
a second determination unit, configured to determine, in a case where the logic channel displayed by the audio input state information is inactive, that a current audio input state is OFF.
